# EUROPÄISCHE PATENTSCHRIFT

(11) **EP 0 898 943 B1**
(45) Veröffentlichungstag und Bekanntmachung des Hinweises auf die Patenterteilung: **12.11.2003**
(21) Anmeldenummer: 98115890.0
(22) Anmeldetag: 24.08.1998
(51) Int. Cl.: A61C 8/00

(54) **Dentalprothetikteil**
Dental prostetic part
Partie prothétique dentaire

(30) Priorität: 23.08.1997 DE 19736863
(43) Veröffentlichungstag der Anmeldung: 03.03.1999
(73) Patentinhaber: Wieland Dental + Technik GmbH & Co. KG, 75179 Pforzheim (DE)
(72) Erfinder: Wagner, Rudolf, Dr., 75196 Remchingen (DE); Rathmer, Reinhold, Dr., 65556 Limburg (DE); Stümke, Manfred, Dr., 75173 Pforzheim (DE)
(74) Vertreter: Patentanwälte Ruff, Wilhelm, Beier, Dauster & Partner

(56) Entgegenhaltungen:
- EP-A- 0 320 024
- DE-A- 3 919 792
- DE-U- 8 905 497
- US-A- 4 850 873

## Beschreibung

Die Erfindung betrifft ein Konfektioniertes, kappenartiges Dentalprothetikteil aus Metall, und ein Set von Komponenten für ein dentales Implantat-System, das solche Dentalprothetikteile enthält.

Die sogenannte Implantologie hat bei der Herstellung von Zahnersatz in den letzten Jahren eine immer größere Bedeutung erlangt. Dies ist unter anderem darauf zurückzuführen, daß einzelne oder mehrere Zähne ersetzt werden können, ohne angrenzende gesunde Zähne zu beschleifen, und daß implantantgetragener Zahnersatz häufig fester sitzt als konventionelle Teil- oder Vollprothesen.

Bekanntermaßen besteht implantatgetragener Zahnersatz im wesentlichen aus dem sogenannten Implantat, einem Implantat-Aufbauteil und der sogenannten prothetischen Restauration, d.h. der vom Implantat getragenen Suprakonstruktion, die den natürlichen Zahn bzw. die natürlichen Zähne nachbildet. Bei den Implantaten handelt es sich um festsitzende Pfosten, meist in Form von Schrauben oder Zylindern, die in den Kieferknochen implantiert werden. Implantate sollen also die natürlichen Zahnwurzeln ersetzen. Auf dem Implantat wird dann ein Implantat-Aufbauteil, meist durch Verschraubung, befestigt. Dieses Aufbauteil besitzt die Funktion eines Befestigungspfeilers für die eigentliche prothetische Arbeit, die auf dem Implantat-Aufbauteil befestigt wird. Wie bereits erwähnt, handelt es sich bei dieser prothetischen Arbeit um den eigentlichen Zahnersatz, d.h. um Kronen oder Brücken, die die natürlichen Zähne ersetzen.

Zur Herstellung einer festsitzenden oder nur bedingt vom Zahnarzt abnehmbaren Implantat-Konstruktion wird das Implantat-Aufbauteil üblicherweise nach einer individuellen Anpassung, beispielsweise durch Fräsen, Angießen, Löten, Lasern oder Kleben am Implantat befestigt und die angefertigte Suprakonstruktion durch Zementieren oder Kleben fest mit dem Aufbauteil verbunden. Alternativ kann man bei solchen festsitzenden Konstruktionen auch so vorgehen, daß entweder das Implantat-Aufbauteil direkt in das Gerüst der Suprakonstruktion eingearbeitet und anschließend durch Verschraubung am Implantat fixiert wird oder daß ein zusätzliches Verbindungsteil in das Gerüst der Suprakonstruktion eingearbeitet und später mit dem in das Implantat eingeschraubten Implantat-Aufbauteil verbunden wird.

Im Zusammenhang mit vom Zahnarzt oder Zahntechniker individuell angepaßten, d.h. wie oben erwähnt beispielsweise durch Fräsen bearbeiteten Implantat-Aufbauteilen wurde bereits angeregt, Zwischenkronen aus Gold zu verwenden, die für jedes einzelne, individuell bearbeitete Aufbauteil hergestellt sind (sh. Manfred Busch in Quintessenz Zahntech. 22, 6, 734-752 (1996) und 22, 7, 866-885 (1996)).

In vielen Fällen ist es jedoch auch bei implantatgetragener Prothetik wünschenswert, daß der Zahnersatz abnehmbar ausgestaltet ist. Dies wird üblicherweise dadurch erreicht, daß die zu befestigende prothetische Konstruktion (Suprakonstruktion) auf dem ebenfalls individuell angepaßten Implantat-Aufbauteil über Druckknöpfe, Steg/Reiter-Kombinationen oder über sonstige Konstruktionselemente jederzeit abnehmbar befestigt ist.

Die bisher beschriebenen, aus dem Stand der Technik bekannten Vorgehensweisen zur Befestigung der Suprakonstruktionen weisen jedoch verschiedene Nachteile auf. Zum einen ist in allen diesen Fällen eine individuelle Anpassung der Implantat-Aufbauteile durch den Zahnarzt oder Zahntechniker vorgesehen. Dies führt beispielsweise bei der oben erwähnten Verwendung von Zwischenkronen dazu, daß diese ebenfalls individuell gefertigt werden müssen. Dazu müssen die fertigbearbeiteten Implantat-Aufbauteile in Gips oder einem speziellen Kunststoff dubliert werden. Weiter haben die beschriebenen Konstruktionen für festsitzenden oder nur bedingt vom Zahnarzt abnehmbaren Zahnersatz den Nachteil, daß vor allem größere Rekonstruktionen auf den Implantaten nicht spannungsfrei befestigt werden können. Da jedoch Implantate im Gegensatz zu natürlichen Zahnwurzeln im Knochen weitgehend ohne jede Eigenbeweglichkeit festsitzen, ist hier ein spannungsfreier Einbau besonders wichtig. Schließlich ist bei den erwähnten Befestigungstechniken für abnehmbaren Zahnersatz zu beobachten, daß einerseits die Haltekraft derartiger Konstruktionen schlecht einstellbar ist und andererseits mit zunehmender Gebrauchsdauer die Haltekraft stark abnimmt.

In der DE-U-89 05 497 ist eine Hülse für die Verankerung von Zahnprothesen offenbart, die eine teilweise konische Außenform besitzt. Diese Hülse ist offensichtlich durch mechanische Bearbeitung gefertigt und wird mit Hilfe einer Fixierschraube in einen als Implantat/Aufbauteil dienenden Tragstift eingeschraubt. Eine ähnliche Konstruktion zeigt die US-Patentschrift US-A-4 850 873. Auch dort wird ein offensichtlich durch mechanische Bearbeitung gefertigtes Hülsenteil durch Verschraubung an einem entsprechend geformten Implantat/Aufbauteil befestigt.

Ein weiteres Verfahren zur Herstellung metallischer Zahnersatzteile ist in der DE-A1-39 19 792 dargestellt. Dort wird auf dem Positiv-Modell eines Abdrucks, der die vom Zahnarzt individuell beschliffene Mundsituation wiedergibt, eine Metallschicht galvanisch abgeschieden. Die eingangs geschilderte Problematik des Aufbringens einer prothetischen Restauration auf Implantat/Aufbauteile bei Implantat gestütztem Zahnersatz ist dort nicht angesprochen.

Die Erfindung stellt sich daher die Aufgabe, die beschriebenen Nachteile des Standes der Technik zu vermeiden. Dementsprechend soll bei dentalen Implantaten ein weitgehend spannungsfreier Sitz sowie ein ausreichender Erhalt einer optimalen Haltekraft gewährleistet sein. Die Erfindung will dabei einen insbesondere abnehmbaren Implantat-Zahnersatz zur Verfügung stellen, der sich vorgefertigter Komponenten wie der genannten Implantat-Aufbauteile eines dentalen Implantat-Systems weitgehend ohne weitere Bearbeitung bedienen kann.

Diese Aufgabe wird gelöst durch ein Dentalprothetikteil mit den Merkmalen des Anspruchs 1. Bevorzugte Ausführungsformen sind in den abhängigen Ansprüchen 2 bis 7 beschrieben. Der Wortlaut sämtlicher Ansprüche wird hiermit durch Bezugnahme zum Inhalt dieser Beschreibung gemacht.

Der Begriff "vorgefertigt" hat bei der Erfindung die Bedeutung, daß die entsprechenden Teile, d.h. das erfindungsgemäße Dentalprothetikteil und das entsprechende Implantat-Aufbauteil nicht vom Zahnarzt oder Zahntechniker individuell gefertigt bzw. bearbeitet werden, sondern (industriell) vorgefertigt, d.h. konfektioniert sind. Dies hat den entscheidenden Vorteil, daß bei einer in vielen Fällen möglichen Verwendung des Implantat-Aufbauteils ohne weitere Bearbeitung durch Zahnarzt/Zahntechniker ein entsprechend vorgefertigtes Standardteil in Form einer Metallkappe zur Verfügung steht. Dadurch werden die entsprechenden Schritte zur individuellen Herstellung einer derartigen Metallkappe für ein nachbearbeitetes Aufbauteil eingespart.

Bei den erwähnten Implantat-Aufbauteilen handelt es sich um die üblichen Bauteile, die mit den zugehörigen Implantaten nach deren Einbringung in den Kieferknochen verbunden werden. Derartige Implantat-Aufbauteile werden üblicherweise auch als Distanzhülsen oder Distanzpfosten bezeichnet und werden von verschiedenen Firmen in unterschiedlicher Form und Abmessung standardmäßig einzeln oder zusammen mit anderen Komponenten von Implantat-Systemen angeboten.

Die erwähnten Aufbauteile können bei der Erfindung insbesondere mindestens teilweise die Form eines Zylinders oder eines Konus aufweisen, wobei beliebige Kombinationen ebenfalls möglich sind. Die erwähnten Aufbauteile können jedoch auch schon industriell vorgefertigt sein und der Form eines beschliffenen Pfeilerzahns entsprechen. D.h. das Aufbauteil kann einen elipsoiden, unregelmäßigen Querschnitt aufweisen. In diesem Zusammenhang kann auf die entsprechenden Prospekte der verschiedenen Herstellerfirmen verwiesen werden.

Bei den entsprechenden Ausführungsformen liegt der (Konus)-winkel üblicherweise zwischen 0° und 8°, wobei Konuswinkel zwischen 0,5° bis 4° und dabei wiederum von 2,5° bis 3° bevorzugt sind. Auch Konuswinkel zwischen 0° und 2°, insbesondere 0,3° bis 2°, sind besonders günstig. Durch die entsprechenden Winkel läßt sich die Haltekraft bzw. Abziehkraft eines erfindungsgemäßen Dentalprothetikteils auf dem Implantat-Aufbauteil in erwünschter Weise variieren.

Die Abmessungen des Dentalprothetikteils betragen vorzugsweise basal im Durchmesser 1 mm bis 10 mm, vorzugsweise 3 mm bis 6,5 mm, coronal im Durchmesser 1 mm bis 10 mm, vorzugsweise 3 mm bis 5 mm, und in der Höhe 1 mm bis 10 mm, vorzugsweise ca. 3 mm bis 8 mm.

Die Wandstärke des Dentalprothetikteils liegt bei der Erfindung zwischen 100 µm und 500 µm, wobei ein Bereich zwischen 200 µm und 300 µm bevorzugt ist. Außerdem ist das erfindungsgemäße Dentalprothetikteil aus Gold oder eines Goldlegierung aufgebaut. Aufgrund seiner Duktilität lässt sich beim Einsatz von Gold eine besonders vorteilhafte Verbindung des Prothetikteils mit dem Aufbauteil realisieren.

Darüber hinaus ist das erfindungsgemäße Dentalprothetikteil durch galvanische Abscheidung gefertigt. Dieses gerade auch bei der Abscheidung von Gold eingeführte, sogenannte Galvanoforming läßt sich zum einen besonders einfach durchführen und führt zum anderen zu einem besonders regelmäßigen Metallkörper mit wenigen Fehlstellen. Darüber hinaus besitzen galvanisch abgeschiedene Metallschichten, insbesondere Goldschichten, gegenüber Gußmetall eine höhere Härte und höhere Duktilität.

In Weiterbildung besitzt das erfindungsgemäße Dentalprothetikteil an mindestens einer seiner Flächen, vorzugsweise an der Innenfläche der "Kappe", eine weitere Beschichtung. Diese Beschichtung kann aus einem Kunststoff oder einer weiteren, vorzugsweise dünnen, Metallschicht bestehen, die beispielsweise zum Erhalt oder zur Verbesserung der Gleitwirkung der Metallkappe in auf das Aufbauteil aufgebrachtem Zustand dient.

Schließlich ist das erfindungsgemäße Dentalprothetikteil an seiner Außenfläche, vorzugsweise unlösbar, mit einer prothetischen Suprakonstruktion verbunden, d.h. es bildet zusammen mit der Suprakonstruktion, die üblicherweise aus einem Metallgerüst und einer Keramik- oder Kunststoffbeschichtung besteht, den eigentlichen Zahnersatz. Dabei erfolgt die Verbindung von Dentalprothetikteil mit der Suprakonstruktion üblicherweise durch Verklebung mit Hilfe eines üblichen Dentalklebers.

Die erfindungsgemäßen Dentalprothetikteile gewährleisten aufgrund ihrer hervorragenden Passung mit dem entsprechenden Implantat-Aufbauteil einen hervorragenden spannungsfreien Sitz zwischen der Suprakonstruktion und deren durch das Implantat und das Implantat-Aufbauteil gebildeten Unterbau. Die Haltekraft zwischen Dentalprothetikteil und Implantat-Aufbauteil kann zusätzlich unter Berücksichtigung von Konuswinkel, Konushöhe, Umfang und sonstiger Form des vorgefertigten Aufbauteils eingestellt oder variiert werden. Das Dentalprothetikteil übernimmt dabei auch die Funktion eines metallischen Gleitmittels und bewirkt konstante Halte- bzw. Abziehkräfte, die einen guten und spannungsfreien Sitz der prothetischen Versorgung, d.h. der Suprakonstruktion auf dem Aufbauteil gewährleisten und ggf. auch eine gute Abnehmbarkeit der prothetischen Versorgung durch den Zahnarzt oder den Patienten ermöglichen. Es findet ein weitgehend friktionsloses Gleiten des Dentalprothetikteils auf dem Aufbauteil durch eine Art "Kapillar-Saugwirkung" statt.

Weiterhin werden durch die erfindungsgemäßen Dentalprothetikteile Fertigungsungenauigkeiten der Suprakonstruktion aufgrund von Abformung, Modellherstellung, thermischen Verzügen durch Gießen des Metallunterbaus oder Brennen der aufgebrachten Keramik usw. kompensiert. Derartige Stör- oder Reibungskontakte können durch quasi plastisches Fließen ohne nachteiligen Friktionsverlust ausgeglichen werden. Schließlich kann bei der Erfindung ein vorgefertigtes Dentalprothetikteil zusammen mit einem vorgefertigten Implantat-Aufbauteil verwendet werden, ohne daß aufwendige Anpassungen des Implantat-Aufbauteils und eine individuelle Herstellung der "Kappe" für dieses bearbeitete Aufbauteil erforderlich sind.

Die Dentalprothetikteile nach der Erfindung werden normalerweise so verwendet, daß sie als vorgefertigtes Teil im Mund des Patienten auf ein entsprechendes vorgefertigtes Implantat-Aufbauteil aufgesetzt sind und auf diesem Dentalprothetikteil direkt im Mund des Patienten eine entsprechend angefertigte prothetische Versorgung, beispielsweise eine Metall/Keramik-Krone oder -Brücke befestigt wird. Diese Befestigung wird üblicherweise mit einem geeigneten konventionellen Dentalkleber erfolgen, wobei eine unlösbare spannungsfreie Verbindung mit optimaler Passung zwischen der Kappenaußenfläche und der Innenfläche der prothetischen Versorgung hergestellt ist. Es ist aber auch möglich, die Klebung außerhalb des Mundes auf dem Meistermodell durchzuführen. Somit sind einerseits erfindungsgemäßes Dentalprothetikteil und Suprakonstruktion und andererseits Implantat und Implantat-Aufbauteil miteinander verbunden. Die so definierten beiden Teile der Dentalprothetik können voneinander getrennt werden, wenn die Abziehkraft größer als die Haftkraft des Dentalprothetikteils an dem Implantat-Aufbauteil ist. Wie bereits erwähnt, kann die Haftkraft bei der Erfindung entsprechend variiert werden, so daß universell festsitzender oder herausnehmbarer Zahnersatz zur Verfügung gestellt werden kann.

Die Erfindung umfaßt weiterhin ein Set von Komponenten für ein dentales Implantat-System, das mindestens eines der beschriebenen Dentalprothetikteile nach der Erfindung aufweist. Bei derartigen Sets ist vorzugsweise mindestens eines dieser Dentalprothetikteile und mindestens ein diesem Teil entsprechendes vorgefertigtes Implantat-Aufbauteil vorhanden. Weiter bevorzugte erfindungsgemäße Sets bestehen aus Implantat, zugehörigem Implantat-Aufbauteil und an das Aufbauteil angepaßtem Dentalprothetikteil nach der Erfindung, wobei ggf. weitere übliche Komponenten oder Zubehörteile eines dentalen Implantat-Systems, wie beispielsweise übliche Zwischenteile oder Schrauben, vorhanden sein können. Durch die erfindungsgemäßen Sets werden dem Kunden die erfindungsgemäßen Teile ggf. mit den entsprechenden anderen Komponenten eines Implantat-Systems zum Erreichen der geschilderten Vorteile in besonders günstiger Weise zur Verfügung gestellt.

Zur Herstellung eines erfindungsgemäßen Dentalprothetikteils wird das Dentalprothetikteil entweder auf dem Modell eines vorgefertigten Implantat-Aufbauteils oder vorzugsweise direkt auf dem Aufbauteil selbst geformt, wobei das sogenannte Galvanoforming, d.h. die galvanische Abscheidung, angewendet wird. Das Formen bzw. die Abscheidung des Dentalprothetikteils erfolgt dabei in an sich bekannter Weise, wobei auch entsprechende Zwischenschichten, beispielsweise zum Leitfähigmachen des Modells oder zur Entfernung des Teils von Modell oder Aufbauteil nach der Formung, vorgesehen sein können.

Die erfindungsgemäßen Sets sind in den Ansprüchen 8 bis 10 dargestellt. Auch der Inhalt dieser Ansprüche wird hiermit durch Bezugnahme zum Inhalt dieser Beschreibung gemacht.

Die beschriebenen Merkmale und weiteren Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich oder zu mehreren in Kombination miteinander verwirklicht sein.

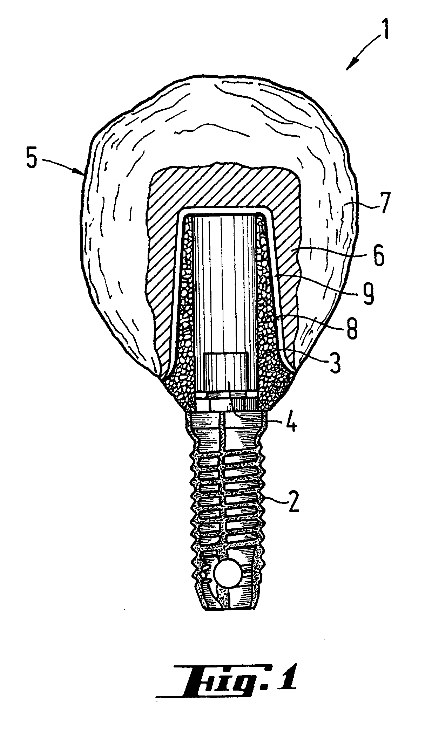

In der Zeichnung zeigt
- Fig. 1: eine Schnittansicht durch einen Implantat-Zahnersatz, bei dem ein erfindungsgemäßes Dentalprothetikteil zum Einsatz kommt,

Der Implantat-Zahnersatz 1 nach Fig. 1 weist ein Schraubenimplantat 2 und ein zugehöriges Implantat-Aufbauteil 3 auf. Aufbauteil 3 und Implantat 2 sind mit Hilfe der Schraube 4 miteinander verbunden.

Weiter ist in Fig. 1 eine Suprakonstruktion 5 dargestellt, die im vorliegenden Fall als Metall/Keramik-Konstruktion vorliegt und aus einem gegossenen Metallgerüst 6 und einer aufgebrannten Keramikverblendung 7 gebildet ist. Selbstverständlich kann anstelle der Keramikverblendung auch eine Kunststoffverblendung vorgesehen sein.

Die Suprakonstruktion 5 ist mit einem erfindungsgemäßen Dentalprothetikteil 8 (in Fig. 1 als dicker schwarzer Strich dargestellt), das die Form einer Kappe aufweist und durch galvanische Abscheidung hergestellt ist, mit Hilfe einer Klebeschicht 9 unlösbar verbunden. Das Dentalprothetikteil 8 sitzt auf dem Implantat-Aufbauteil 3 auf und ist als vorgefertigtes Teil an Form und Abmessungen des Aufbauteils 3 adaptiert. Durch die gute Passung des Dentalprothetikteils 8 wird insgesamt ein guter Sitz der Suprakonstruktion 5 mit entsprechend hoher Haltekraft erreicht. Ggf. vorhandene Fertigungsungenauigkeiten der Suprakonstruktion und dadurch auftretende Spannungen werden, wie bereits beschrieben, ausgeglichen. Dadurch werden die bereits erwähnten Vorteile bei der Erfindung erzielt.

Es versteht sich von selbst, daß die in Fig. 1 gewählte Befestigung zwischen Implantat 2 und Implantat-Aufbauteil 3 für die Erfindung nicht einschränkend ist. So können zwischen Implantat 2 und Aufbauteil 3 grundsätzlich alle üblichen Befestigungsarten verwendet werden, d.h. beispielsweise bei Verschraubungen solche mit Innensechskant, Außensechskant, Innenachtkant, Außenachtkant.

## Patentansprüche

1. Konfektioniertes, kappenartiges Dentalprothetikteil aus Metall, das bezüglich Form und Abmessungen weitgehend an ein konfektioniertes Aufbauteil eines dentalen Implantat-Systems angepasst ist, **dadurch gekennzeichnet, dass** es aus Gold oder aus einer Goldlegierung mit einer Wandstärke zwischen 100 µm und 500 µm durch galvanische Abscheidung gefertigt ist.

2. Prothetikteil nach Anspruch 1, **dadurch gekennzeichnet, dass** das Aufbauteil mindestens teilweise zylinderförmig und/oder konusförmig ist.

3. Prothetikteil nach Anspruch 2, **dadurch gekennzeichnet, dass** der Konuswinkel zwischen 0° bis 8°, vorzugsweise 0,5° bis 4°, insbesondere 2,5° bis 3°, beträgt.

4. Prothetikteil nach einem der vorhergehenden Ansprüche, **dadurch gekennzeichnet, dass** die Abmessungen des Prothetikteils basal im Durchmesser 1 mm bis 10 mm, vorzugsweise 3 mm bis 6,5 mm, coronal im Durchmesser 1 mm bis 10 mm, vorzugsweise 3 mm bis 5 mm, und in der Höhe 1 mm bis 10 mm, vorzugsweise ca. 3 mm bis 8 mm, betragen.

5. Prothetikteil nach einem der vorhergehenden Ansprüche, **dadurch gekennzeichnet, dass** seine Wandstärke zwischen 200 µm und 300 µm beträgt.

6. Prothetikteil nach einem der vorhergehenden Ansprüche, **dadurch gekennzeichnet, dass** es an mindestens einer seiner Flächen, vorzugsweise an seiner Innenfläche, eine Beschichtung besitzt.

7. Prothetikteil nach einem der vorhergehenden Ansprüche, **dadurch gekennzeichnet, dass** es an seiner Außenfläche, vorzugsweise unlösbar, mit einer prothetischen Suprakonstruktion verbunden ist.

8. Set von Komponenten für ein dentales Implantat-System, **dadurch gekennzeichnet, dass** es mindestens ein Dentalprothetikteil nach einem der Ansprüche 1 bis 7 aufweist.

9. Set nach Anspruch 8, **dadurch gekennzeichnet, dass** es mindestens aufweist: ein Dentalprothetikteil nach einem der Ansprüche 1 bis 7 und ein konfektioniertes Aufbauteil eines dentalen Implantat-Systems, an das das Dentalprothetikteil in Form und Abmessungen angepasst ist.

10. Set nach Anspruch 8 oder Anspruch 9 bestehend aus Implantatteil, Aufbauteil und Dentalprothetikteil nach einem der Ansprüche 1 bis 7 sowie ggf. weiteren üblichen Komponenten und/oder Zubehörteilen eines dentalen Implantat-Systems.

## Claims

1. Ready-to-use, cap-like dental prosthetic part made from metal, which in terms of its shape and dimensions is substantially matched to a ready-to-use abutment part of a dental implant system, **characterized in that** it is made from gold or a gold alloy with a wall thickness of between 100 µm and 500 µm by electroplating.

2. Prosthetic part according to Claim 1, **characterized in that** the abutment part is at least partially cylindrical and/or conical.

3. Prosthetic part according to Claim 2, **characterized in that** the cone angle is between 0° and 8°, preferably 0.5° and 4°, in particular 2.5° and 3°.

4. Prosthetic part according to one of the preceding claims, **characterized in that** the dimensions of the prosthetic part are a basal diameter of 1 mm to 10 mm, preferably 3 mm to 6.5 mm, a coronal diameter of 1 mm to 10 mm, preferably 3 mm to 5 mm, and a height of 1 mm to 10 mm, preferably approx. 3 mm to 8 mm.

5. Prosthetic part according to one of the preceding claims, **characterized in that** its wall thickness is between 200 µm and 300 µm.

6. Prosthetic part according to one of the preceding claims, **characterized in that** it has a coating on at least one of its surfaces, preferably on its inner surface.

7. Prosthetic part according to one of the preceding claims, **characterized in that** at its outer surface it is joined, preferably non-releasably, to a prosthetic superstructure.

8. Set of components for a dental implant system, **characterized in that** it includes at least one dental prosthetic part according to one of Claims 1 to 7.

9. Set according to Claim 8, **characterized in that** it at least includes: a dental prosthetic part according to one of Claims 1 to 7 and a ready-to-use abutment part of a dental implant system, to which the shape and dimensions of the dental prosthetic part are matched.

10. Set according to Claim 8 or Claim 9, comprising implant part, abutment part and dental prosthetic part according to one of Claims 1 to 7 as well as, if appropriate, further standard components and/or accessories of a dental implant system.

## Revendications

1. Pièce prothétique dentaire confectionnée, de type capuchon, en métal, en forme et dimensions largement adaptée à une pièce rapportée confectionnée d'un système d'implant dentaire, **caractérisée en ce qu'**elle est fabriquée en or ou dans un alliage d'or avec une épaisseur de paroi entre 100 µm et 500 µm par dépôt galvanique.

2. Pièce prothétique selon la revendication 1, **caractérisée en ce que** la pièce rapportée est au moins en partie cylindrique et/ou conique.

3. Pièce prothétique selon la revendication 2, **caractérisée en ce que** l'angle conique se situe entre 0° et 8°, de préférence entre 0,5° et 4°, en particulier entre 2,5° et 3°.

4. Pièce prothétique selon l'une quelconque des revendications précédentes, **caractérisée en ce que** les dimensions de la pièce prothétique mesurent à la base de 1 mm à 10 mm en diamètre, de préférence de 3 mm à 6,5 mm, à la couronne de 1 mm à 10 mm en diamètre, de préférence de 3 mm à 5 mm, et en hauteur de 1 mm à 10 mm, de préférence d'environ 3 mm à 8 mm.

5. Pièce prothétique selon l'une quelconque des revendications précédentes, **caractérisée en ce que** son épaisseur de paroi se situe entre 200 µm et 300 µm.

6. Pièce prothétique selon l'une quelconque des revendications précédentes, **caractérisée en ce qu'**elle possède un revêtement sur au moins l'une de ses faces, de préférence sur sa face intérieure.

7. Pièce prothétique selon l'une quelconque des revendications précédentes, **caractérisée en ce qu'**elle est reliée sur sa face extérieure, de préférence de façon inamovible, à une suprastructure prothétique.

8. Ensemble de composants pour un système d'implant dentaire, **caractérisé en ce qu'**il présente au moins une pièce prothétique dentaire selon l'une quelconque des revendications 1 à 7.

9. Ensemble selon la revendication 8, **caractérisé en ce qu'**il présente au moins : une pièce prothétique dentaire selon l'une quelconque des revendications 1 à 7 et une pièce rapportée confectionnée d'un système d'implant dentaire à laquelle la pièce prothétique dentaire est adaptée en forme et dimensions.

10. Ensemble selon la revendication 8 ou la revendication 9, composé d'une pièce d'implant, d'une pièce rapportée et d'une pièce prothétique dentaire selon l'une quelconque des revendications 1 à 7, ainsi que, le cas échéant, d'autres composants et/ou accessoires usuels d'un système d'implant dentaire.
